## Europäisches Patentamt

## European Patent Office

## Office européen des brevets

(19)

(11) Veröffentlichungsnummer: **0 331 985**
**A2**

(12) # EUROPÄISCHE PATENTANMELDUNG

(21) Anmeldenummer: **89103210.4**

(22) Anmeldetag: **23.02.89**

(51) Int. Cl.⁴: **H04N 9/64**

(30) Priorität: **05.03.88 DE 3807248**

(43) Veröffentlichungstag der Anmeldung:
**13.09.89 Patentblatt 89/37**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Wendland, Broder, Prof. Dr. Ing.**
**Am Stadtgarten 58**
**D-4355 Waltrop(DE)**
Erfinder: **Silverberg, Michael, Dipl.-Ing.**
**Fritz-Reuter-Strasse 6**
**D-4720 Beckum(DE)**

(54) **Verfahren und Einrichtungen zur Codierung und Decodierung von Farbfernsehsignalen.**

(57) Es ist bekannt, bei Farbfernsehübertragungssystemen sender- und empfangsseitig dreidimensionale Filterungen vorzunehmen, um dadurch bei der Wiedergabe möglichst wenig Störungen in Form von cross-colour und cross-luminance zu erhalten. Bei derartigen bekannten Systemen, beispielsweise bei einem PAL-Farbfernsehübertragungssystem, erfolgt die PAL-Codierung und PAL-Decodierung ohne Berücksichtigung augenphysiologischer Gegebenheiten.

Bei den neuen Einrichtungen werden in jedem der beiden Farbdifferenzsignalkanäle eine eigene dreidimensionale Filterung durchgeführt, wobei die beiden Teilfilter unterschiedlich dimensioniert sind.

FIGUR 1

EP 0 331 985 A2

## VERFAHREN UND EINRICHTUNGEN ZUR CODIERUNG UND DECODIERUNG VON FARBFERNSEHSIGNA-LEN

Die Erfindung betrifft eine Einrichtung zur Codierung von Farbfernsehsignalen mit den im Oberbegriff des Anspruchs 1 angegebenen Merkmalen. Die Erfindung betrifft weiterhin eine Einrichtung zur Decodierung von Farbfernsehsignalen mit den im Oberbegriff des Anspruchs 5 angegebenen Merkmalen sowie Verfahren zur Übertragung von Farbfernsehsignalen unter Verwendung einer Einrichtung zur Codierung von Farbfernsehsignalen und einer Einrichtung zur Decodierung von Farbfernsehsignalen.

Aus der Zeitschrift "radio mentor", Heft 12, 1969, S. 847-851, ist eine Einrichtung zur Codierung von Farbfernsehsignalen nach dem PAL-Standard bekannt. Bei dieser bekannten Einrichtung ist im Weg des Luminanzsignals eine Farbträgerfalle (Notchfilter) vorgesehen. Mittels dieser Farbträgerfalle soll erreicht werden, daß auf der Empfangsseite bei der Demodulation des Farbträgers Luminanzanteile nicht fälschlicherweise als Chrominanzsignale ausgewertet, d.h., auf eine niedrigere Frequenz umgesetzt werden und dadurch niederfrequentes farbiges Rauschen erzeugen.

Aus der Zeitschrift "Fernseh- und Kino-Technik", 39 Jg., Heft 3, 1985, S. 123-135, ist ein digitaler PAL-Codec (PAL-Coder und PAL-Decoder) mit verbesserter Luminanz-Chrominanz-Trennung bekannt. Mittels dieses digitalen PAL-Codecs sollen störende Übersprecheffekte (Cross-Colour and Cross-Luminance), wie sie bei den dort als bekannt vorgesetzten PAL-Codecs auftreten, reduziert bzw. vermieden werden. Um dies zu erreichen, wird dort im wesentlichen vorgeschlagen, neben der in $f_x$-Richtung ohnehin vorgesehenen Bandbegrenzung bei etwa 5.5 MHz eine kombinierte vertikal-zeitliche Vor- und Nachfilterung vorzunehmen. Diese Maßnahmen führen insgesamt gesehen zu einer dreidimensionalen Bandbegrenzung von Luminanz- und Chrominanzsignal derart, daß sowohl der Luminanz- als auch der Chrominanzkomponente im dreidimensionalen Frequenzraum eindeutige Plätze zugeordnet werden, so daß empfangsseitig eine möglichst fehlerfreie Trennung von Luminanz- und Chrominanzkomponente möglich ist.

Weiterhin ist aus der US-A-4,683,490 eine Einrichtung zur Codierung von Farbfernsehsignalen bei einem NTSC-Farbfernsehübertragungssystem bekannt, bei der unter anderem im Luminanzkanal und in den Chrominanzkanälen jeweils eine dreidimensionale Filterschaltung angeordnet ist. Die dreidimensionale Filterschaltung in den Chrominanzkanälen weist dreidimensionale Teilfilter auf, welche aus einer Reihenschaltung eines Tiefpaßfilters und eines kombinierten vertikal-zeitlichen Filters bestehen.

Ausgehend von diesem Stand der Technik liegt der Erfindung die Aufgabe zugrunde, Einrichtungen der in den Oberbegriffen der Ansprüche 1 bzw. 5 angegebenen Art sowie Verfahren zur Übertragung von Farbfernsehsignalen derart weiterzubilden, daß den augenphysiologischen Gegebenheiten besser Rechnung getragen wird.

Diese Aufgabe wird durch die in den kennzeichnenden Teilen der Patentansprüche 1 bzw. 5 angegebenen Merkmale gelöst.

Vorteilhafte Ausgestaltungen der Erfindung sind in den Ansprüchen 2-4 bzw. 6-9 beschrieben.

Gegenstand der Ansprüche 10-12 sind Verfahren, bei denen Einrichtungen nach einem oder mehreren der Ansprüche 1-9 verwendet werden.

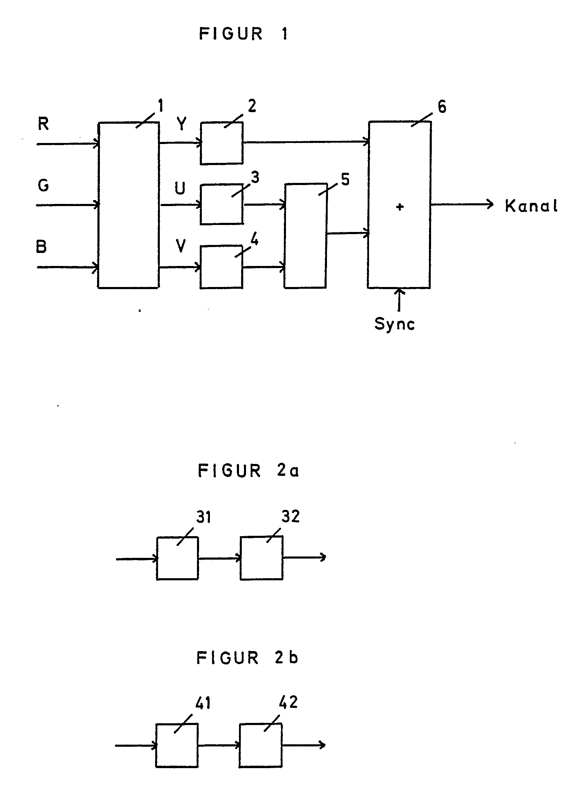

Die Vorteile der Erfindung bestehen insbesondere darin, daß - durch die getrennte dreidimensionale Filterung der Farbdifferenzsignale - jede dieser Komponenten mit einer für die jeweilige Komponente optimalen Auflösung übertragen werden kann. Weitere vorteilhafte Eigenschaften der Erfindung ergeben sich aus der Erläuterung der Erfindung anhand der Figuren 1-7, wobei neben der beschriebenen Anwendung bei einem PAL-Farbfernsehübertragungssystem auch der Einsatz z.B. bei einem NTSC-Farbfernsehübertragungssystem möglich ist.

Es zeigt:

Figur 1 ein Prinzipschaltbild einer Einrichtung zur Codierung von Farbfernsehsignalen gemäß der Erfindung,

Figur 2a eine detailliertere Darstellung des dreidimensionalen Teilfilters 3 von Figur 1,

Figur 2b eine detailliertere Darstellung des dreidimensionalen Teilfilters 4 von Figur 1,

Figur 2c ein erstes Beispiel für die grundsätzliche Wirkungsweise des Filters 32 von Figur 2a bzw. des Filters 42 von Figur 2b,

Figur 2d ein zweites Beispiel für die grundsätzliche Wirkungsweise des Filters 32 von Figur 2a bzw. des Filters 42 von Figur 2b,

Figur 3 eine detailliertere Darstellung der dreidimensionalen Filterschaltung 2 von Figur 1,

Figur 4 ein Prinzipschaltbild einer Einrichtung zur Decodierung von PAL-Farbfernsehsignalen gemäß der Erfindung,

Figur 5a eine detailliertere Darstellung des dreidimensionalen Teilfilters 52 von Figur 4,

Figur 5b eine detailliertere Darstellung des dreidimensionalen Teilfilters 53 von Figur 4,

Figur 6 eine detailliertere Darstellung der dreidimensionalen Filterschaltung 50 von Figur 4, und

Figur 7 ein Beispiel für die Realisierung eines kombinierten vertikal-zeitlichen Filters.

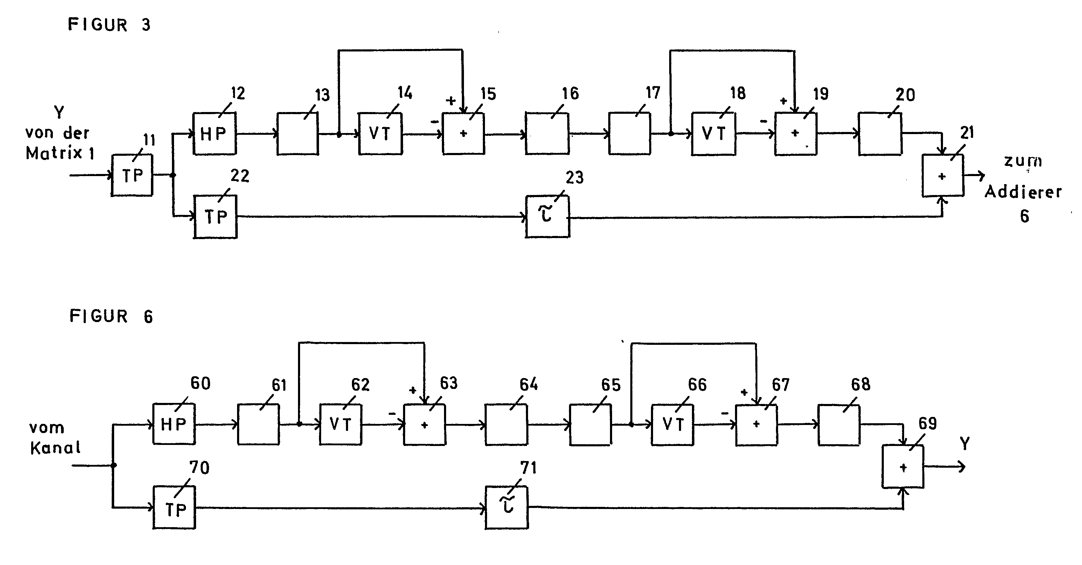

Die Figur 1 zeigt ein Prinzipschaltbild einer Einrichtung zur Codierung von Farbfernsehsignalen gemäß der Erfindung. Am Eingang der Einrichtung liegen in einer Farbfernsehkamera erzeugte RGB-Signale an. Aus diesen werden in einer Matrixschaltung 1 ein Luminanzsignal Y, ein erstes Farbdifferenzsignal U und ein zweites Farbdifferenzsignal V erzeugt. Das Luminanzsignal Y wird einer im Luminanzkanal angeordenten dreidimensionalen Filterschaltung 2 zugeführt, deren Funktionsweise im Zusammenhang mit der Figur 3 näher erläutert wird. Das dreidimensional gefilterte Luminanzsignal wird einem Eingang einer Additionsschaltung 6 zugeführt.

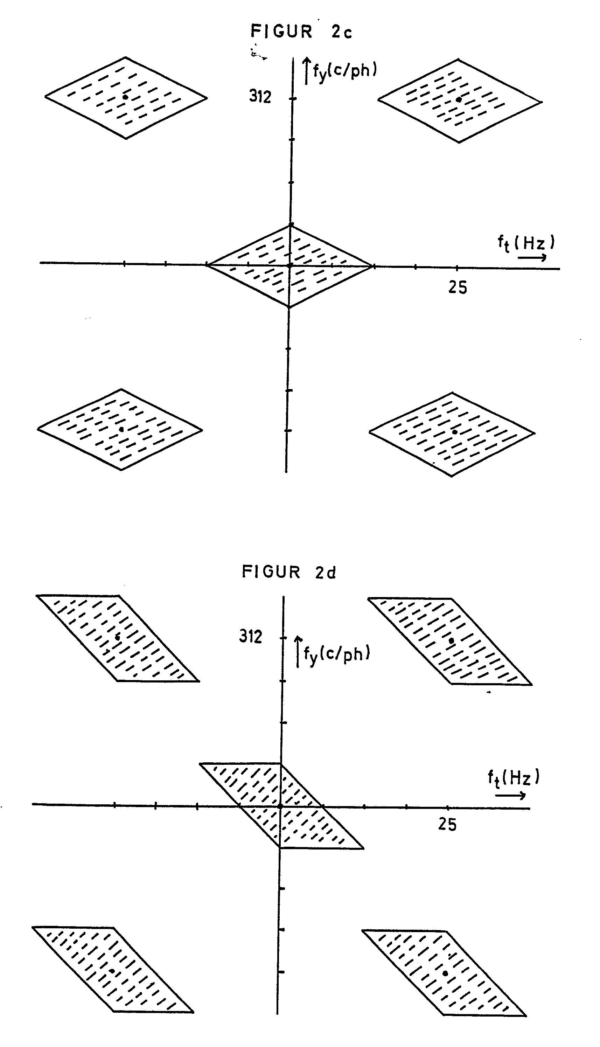

Das erste Farbdifferenzsignal U wird einer dreidimensionalen Filterschaltung 3 zugeführt, deren Funktionsweise im Zusammenhang mit den Figuren 2a, c und d näher erläutert wird. Das dreidimensional gefilterte Farbdifferenzsignal U wird einem PAL-Modulator 5 zugeführt.

Das zweite Farbdifferenzsiganl V wird einer dreidimensionalen Filterschaltung 4 zugeführt, deren Funktionsweise im Zusammenhang mit den Figuren 2b,c und d näher erläutert wird. Das dreidimensional gefilterte Farbdifferenzsignal V wird ebenfalls dem PAL-Modulator 5 zugeführt.

Im PAL-Modulator 5 werden die dreidimensional gefilterten Farbdifferenzsignale U und V in grundsätzlich bekannter Weise in ein moduliertes Chrominanzsignal umgewandelt. Dieses wird einem weiteren Eingang der Additionsschaltung 6 zugeführt, an dessen Ausgang folglich ein normgerechtes PAL-codiertes Farbfernsehsignal zur Verfügung steht.

Die Figur 2a zeigt eine detailliertere Darstellung des dreidimensionalen Teilfilters 3 von Figur 1. Das Teilfilter 3 besteht aus einer Reihenschaltung eines horizontalen Tiefpaßfilters 31 und eines kombinierten vertikal-zeitlichen Filter 32. Im horizontalen Tiefpaßfilter 31 wird das Farbdifferenzsignal U in horizontaler Richtung bei 1.3 MHz bandbegrenzt. Im vertikal-zeitlichen Filter 32 wird das horizontal bandbegrenzte Farbdifferenzsignal in der $f_y$, $f_t$-Ebene bandbegrenzt.

Diese Bandbegrenzung kann entweder mittels einer planaren (echt zweidimensionalen) Filterung oder durch eine Kaskadierung zweier eindimensionaler, in der $f_y$, $f_t$-Ebene diagonal arbeitender Filter erreicht werden. Ein Beispiel für die Wirkung derartiger Filter ist in der Figur 2c gezeigt. Die schraffierten Bereiche entsprechen dabei den Durchlaßbereichen.

Alternativ hierzu die genannte Bandbegrenzung auch durch eine Kaskadierung eines in rein vertikaler Richtung wirkenden Filters mit einem in diagonaler Richtung wirkenden vertikal-zeitlichen Filter erreicht werden. Ein Beispiel für die Wirkung derartiger Filter ist in der Figur 2d gezeigt. Die schraffierten Bereiche entsprechen auch hier den Durchlaßbereichen.

Die Figur 2b zeigt eine detailliertere Darstellung des dreidimensionalen Teilfilters 4 von Figur 1. Das Teilfilter 4 besteht aus einer Reihenschaltung eines horizontalen Tiefpaßfilters 41 und eines kombinierten vertikal-zeitlichen Filters 42. Im horizontalen Tiefpaßfilter 41 wird das Farbdifferenzsignal V in horizontaler Richtung bei 1.3 MHz bandbegrenzt. Im vertikal-zeitlichen Filter 42 wird das horizontal bandbegrenzte Farbdifferenzsignal in der $f_y$, $f_t$-Ebene bandbegrenzt. Diese Bandbegrenzung kann mittels Filter erreicht werden, deren grundsätzliche Wirkungsweise mit der Wirkungsweise der in den Figuren 2c und 2d gezeigten Filter übereinstimmt.

Ein Merkmal der Erfindung besteht nun darin, die Durchlaßbereiche des vertikal-zeitlichen Filters 32 für das horizontal bandbegrenzte Farbdifferenzsignal U kleiner zu wählen als die Durchlaßbereiche des vertikal-zeitlichen Filters 42 für das horizontal bandbegrenzte Farbdifferenzsignal V. Der Grund für diese Maßnahme besteht darin, daß das menschliche Auge für Bewegungsverschleifungen bezüglich des Farbdifferenzsignals U wesentlich unempfindlicher ist als für Bewegungsverschleifungen bezüglich des Farbdifferenzsignals V. Das bedeutet mit anderen worten, daß das Farbdifferenzsignal V mit größerer Auflösung (bzw. höherer Bandbereite) in zeitlicher Richtung übertragen wird als das Farbdifferenzsignal U. Der dreidimensionale Frequenzraum, der für das Farbdifferenzsignal U mittels der dreidimensionalen Filterung geschaffen werden muß, ist somit kleiner als der für das Farbdifferenzsignal V geschaffene Frequenzraum. Anschaulich betrachtet bedeutet dies, daß die schraffierten Flächen in den Figuren 2c bzw. 2d für die U-Komponente der Farbinformation kleiner sind als die für die V-Komponente.

Die Frequenzräume, die den Farbdifferenzsignalen mittels der beschriebenen Filter 31, 32, 41 und 42 fest zugeordnet wurden, müssen nun im Luminanzsignal freigemacht werden. Dies geschieht ebenfalls durch eine dreidimensionale Filterung mittels eines Filters 2, dessen Aufbau in der Figur 3 näher gezeigt ist.

Dem Eingang des in Figur 3 gezeigten Filters wird das in Matrix 1 (siehe Figur 1) erzeugte Luminanzsignal Y zugeführt. Dieses wird zunächst in horizontaler Richtung bei 6 MHz bandbegrenzt. Das bei 6 MHz bandbegrenzte Signal wird aufgespalten in einen Anteil, dessen Frequenzen von 0-3,6 MHz reichen (Tiefpaßfilter 22), und einen Anteil, dessen Frequenzen von 3.6-6.0 MHz reichen (Hochpaßfilter 12).

Die letztgenannten, höherfrequenten Anteile des Luminanzsignals werden einer vertikal-zeitlichen Filterung unterworfen, die im einzelnen wie folgt vor sich geht:

Die höherfrequenten Luminanzsignalanteile werden zunächst ersten Schaltmitteln 13, 14, 15, 16 zugeführt, in denen sie einer vertikal-zeitlichen Filterung unterworfen werden, die invers zu der vertikal-zeitlichen Filterung des ersten Farbdifferenzsignals U ist. Dadurch werden im dreidimensionalen Frequenzraum eventuelle Luminanzkomponenten von den Plätzen entfernt, die dem ersten Farbdifferenzsignal U durch die dreidimensionale Filterung im Filter 3 (siehe Figur 1) zugeordnet wurden.

Hierzu werden die höherfrequenten Luminanzsignalanteile in einer Modulatorschaltung 13 ebenso moduliert wie das Farbdifferenzsignal U im PAL-Coder 5. Zu dieser U-Modulation der höherfrequenten Luminanzsignalanteile wird eine modifizierte Trägerfrequenz verwendet, die folgende Eigenschaften besitzt:

- sie bewirkt in der $f_y$, $f_t$-Ebene die gleichen Verschiebungen wie der im herkömmlichen PAL-Coder verwendete Farbhilfsträger;

- sie hat in $f_x$-Richtung eine Frequenz, die größer ist als die höchste Horizontalfrequenz der Luminanzkomponente.

Auf diese Weise wird erreicht, daß für horizontale Frequenzen keine Alias-Störungen auftreten. Anschaulich betrachtet werden die höherfrequenten Luminanzanteile durch die Modulation mit der Trägerfrequenz derart verschoben, daß die "späteren spektralen Lücken" im Luminanzsignal um den Ursprung zentriert werden. Dann erfolgt eine zur dreidimensionalen Filterung des Farbdifferenzsignals U inverse Filterung, indem das Ausgangssignal des Modulators 13 im vertikal-zeitlichen Filter 14 derselben vertikal-zeitlichen Filterung unterworfen wird wie das Farbdifferenzsignal U im vertikal-zeitlichen Filter 32 und anschließend in einer Addierstufe 15 vom Ausgangssignal des Modulators 13 subtrahiert wird. Das Ausgangssignal der Addierstufe 15 wird in einem Demodulator 16 einer Verarbeitung unterworfen, die invers zu der des Modulators 13 ist, und dadurch wieder in den höherfrequenten Luminanzsignalbereich gebracht.

Das Ausgangssignal des Demodulators 16 ist nun im dreidimensionalen Frequenzraum genau auf die Räume bandbegrenzt, die nicht vom Farbdifferenzsignal U belegt sind.

Das Ausgangssignal des Demodulators 16 muß nun einer weiteren vertikal-zeitlichen Filterung unterzogen werden, um genau die Räume freizuschaffen, die dem zweiten Farbdifferenzsignal V durch dessen dreidimensionale Filterung im Filter 4 zugeordnet wurden.

Hierzu wird das Ausgangssignal des Demodulators 16 zweiten Schlatmitteln 17, 18, 19, 20 zugeführt, in denen es einer vertikal-zeitlichen Filterung unterworfen wird, die invers zu der vertikal-zeitlichen Filterung des zweiten Farbdifferenzsignals V ist. In einer Modulatorschaltung 17 wird das Ausgangssignal des Demodulators 16 ebenso moduliert wie das Farbdifferenzsiganl V im PAL-Coder 5. Die bei dieser Modulation verwendete modifizierte Trägerfrequenz besitzt dieselben Eigenschaften wie die oben beschriebene modifizierte Trägerfrequenz. Anschaulich betrachtet wird das Ausgangssignal des Demodulators 16 durch die Modulation mit der modifizierten Trägerfrequenz derart verschoben, daß die "späteren spektralen Lücken" im Luminanzsignal in die Nähe des Ursprungs zurückgefaltet werden. Dann erfolgt eine zur dreidimensionalen Filterung des Farbdifferenzsignals V inverse Filterung, indem das Ausgangssignal des Modulators 7 im vertikal-zeitlichen Filter 18 derselben vertikal-zeitlichen Filterung unterworfen wird wie das Farbdifferenzsignal V im vertikal-zeitlichen Filter 42 und anschließend in einer Addierstufe 19 vom Ausgangssignal des Modulators 17 subtrahiert wird. Das Ausgangssignal der Addierstufe 19 wird in einem Demodulator 20 einer Verarbeitung unterworfen, die invers zu der des Modulators 17 ist, und dadurch wieder in den höherfrequenten Luminanzsignalbereich gebracht. Das Ausgangssignal des Demodulators 20 ist nun im dreidimensionalen Frequenzraum genau auf die Räume bandbegrenzt, die nicht von den Farbdifferenzsignalen U und V belegt sind.

Dieses Ziel hätte alternativ zum beschriebenen Ausführungsbeispiel auch erreicht werden können, wenn die Reihenfolge der ersten (13, 14, 15, 16) und zweiten (17, 18, 19, 20) Schaltmittel vertauscht worden wäre, d.h., wenn im Luminanzsignal zuerst die Freiräume für die V-Komponente und dann erst die Freiräume für die U-Komponente der Farbinformation geschaffen worden wären.

Das Ausgangssignal des Demodulators 20 wird in einer Addierstufe 21 zum verzögerten (Verzögerungsglied 23) niederfrequenten Luminanzsiganlanteil addiert. Am Ausgang der Addierstufe 21 steht das dreidimensional gefilterte Luminanzsignal zur Verfügung. Dieses wird der Addierstufe 6 (siehe Figur 1) zugeführt und dort mit dem Chrominanzsignal zur Bildung eines Standard-PAL-Signal aufaddiert, welches dann über den Übertragungskanal übertragen wird.

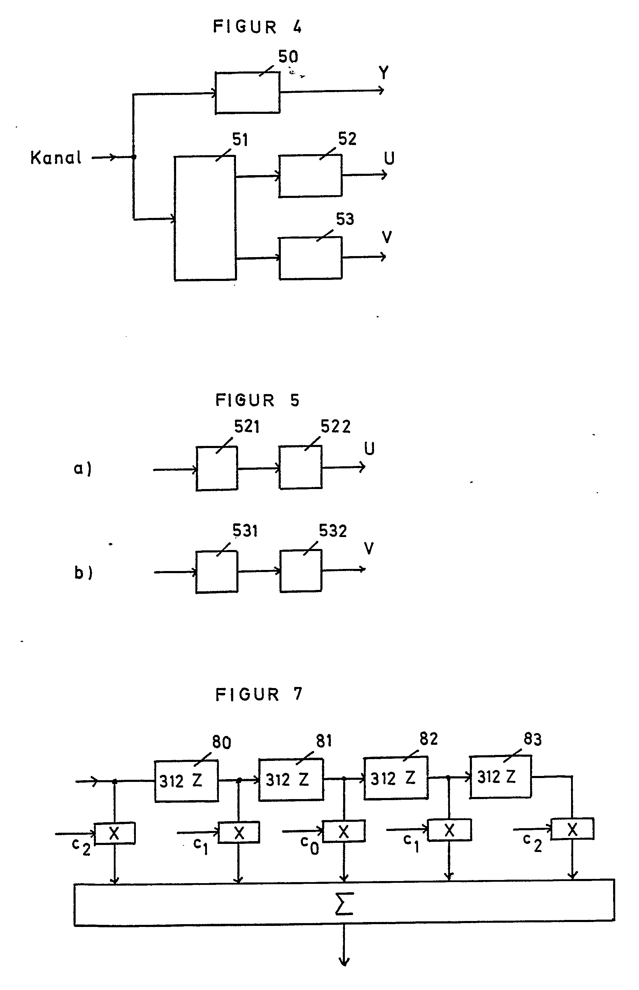

Im folgenden wird anhand der Figuren 4-6 die empfängsseitige Verarbeitung des übertragenen PAL-Signals näher beschrieben.

Die Figur 4 zeigt ein Prinzipschaltbild einer Einrichtung zur Decodierung von PAL-Farbfernsehsignalen gemäß der Erfindung. Am Eingang liegt das über den Übertragungskanal übertragene PAL-Farbfernsehsignal an. Dieses wird einerseits einer dreidimensionalen Filterschaltung 50, deren Funktionsweise im Zusammenhang mit der Figur 6 näher erläutert wird, und andererseits einem herkömmlichen PAL-Demodulator 51 zugeführt.

Ein erstes Ausgangssignal des PAL-Demodulators 51 wird einer dreidimensionalen Filterschaltung 52 zugeführt, deren Funktionsweise im Zusammenhang mit der Figur 5a näher erläutert wird.

Ein zweites Ausgangssignal des PAL-Demodulators 51 wird einer dreidimensionalen Filterschaltung 51 zugeführt, deren Funktionsweise im Zusammenhang mit der Figur 5b näher erläutert wird.

Die Figur 5a zeigt eine detailliertere Darstellung des dreidimensionalen Teilfilters 52 von Figur 4. Das Teilfilter 52 besteht aus einer Reihenschaltung eines kombinierten vertikal-zeitlichen Filters 521 und eines horizontalen Tiefpaßfilters 522. Das kombinierte vertikal-zeitliche Filter 521 ist ebenso aufgebaut und dimensioniert wie das kombinierte vertikal-zeitliche Filter 32 auf der Sendeseite. Im horizontalen Tiefpaßfilter 522 wird das Ausgangssignal des vertikal-zeitlichen Filters 521 bei 0,7 MHz bandbegrenzt.

Die Figur 5b zeigt eine detailliertere Darstellung des dreidimensionalen Teilfilters 53 von Figur 4. Das Teilfilter 53 besteht aus einer Reihenschaltung eines kombinierten vertikal-zeitlichen Filters 531 und eines horizontalen Tiefpaßfilter 532. Das kombinierte vertikal-zeitliche Filter 531 ist ebenso aufgebaut und dimensioniert wie das kombinierte vertikal-zeitliche Filter 42 auf der Sendeseite. Im horizontalen Tiefpaßfilter 532 wird das Ausgangssignal des vertikal-zeitlichen Filters 531 bei 0,7 MHz bandbegrenzt.

Die oben beschriebene Bandbegrenzung der Farbdifferenzsignale in horizontaler Richtung kann deshalb bei 0.7 MHz (bzw. 700 KHz) erfolgen, weil die dadurch erreichte Auflösung in horizontaler Richtung für die am Ausgang des horizontalen Tiefpaßfilters 522 bzw. 532 erhaltenen Farbdifferenzsignale für das menschliche Auge ausreichend ist. Diese Bandbegrenzung bei 0.7 MHz ist auch die Voraussetzung dafür, daß sender- und empfangsseitig die spektralen Freiräume im Luminanzsignal nur für Luminanzsignalfrequenzen geschaffen werden müssen, welche oberhalb von 3.6 MHz liegen.

Die Figur 6 zeigt eine detailliertere Darstellung der dreidimensionalen Filterschaltung 50 von Figur 4. Dem Eingang dieser Filterschaltung wird das über den Kanal übertragene PAL-Farbfernsehsignal zugeführt, welches wegen der begrenzten Bandbreite des Übertragungskanals in horizontaler Richtung bei 5 MHz bandbegrenzt ist. Dieses Signal wird aufgespalten in einem Anteil, dessen Frequenzen von 0-3.4 MHz reichen (Tiefpaßfilter 70), und einen Anteil, dessen Frequenzen von 3.4-5 MHz reichen (Hochpaßfilter 60).

Die letztgenannten, höherfrequenten Anteile werden einer vertikal-zeitlichen Filterung unter Verwendung erster Schaltmittel 61, 62, 63, 64 und zweiter Schaltmittel 65, 66, 67, 68 unterworfen. Die ersten bzw. zweiten Schaltmittel sind dabei ebenso aufgebaut wie die senderseitig verwendeten ersten bzw. zweiten Schaltmittel 13, 14, 15, 16 bzw. 17, 18, 19, 20. Die Dimensionierung des empfangsseitigen vertikal-zeitlichen Filters kann jedoch im Vergleich zum senderseitigen vertikal-zeitlichen Filter variiert werden. Dadurch kann ein durch die Senderfilterung verursachter Verlust an Bewegungsauflösung wieder kompensiert werden. Das vertikalzeitlich gefilterte Ausgangssignal des Demodulators 68 wird in einer Addierstufe 69 zum verzögerten (Verzögerungsglied 71) niederfrequenten Luminanzsignalanteil addiert. Am Ausgang der Addierstufe 69 steht das dreidimensional gefilterte Luminanzsignal zur Verfügung.

Im folgenden werden Übertragungsverfahren beschrieben, welche sende- und/oder empfangsseitig von den oben beschriebenen Filtern Gebrauch machen.

Bei einem ersten Verfahren wird sendeseitig ein Coder verwendet, wie er in einem oder mehreren der Ansprüche 1-6 beschrieben ist. Wird nun empfangsseitig ein PAL-Farbfernsehempfänger verwendet, welcher einen herkömmlichen PAL-Decoder aufweist, so ergibt sich insgesamt im Vergleich zu Übertragungsverfahren mit herkömmlichen PAL-Codern und -Decodern eine Verringerung von Cross-Colour und Cross-Luminance.

Bei einem zweiten Verfahren wird senderseitig ein herkömmlicher Coder verwendet und empfangsseitig ein PAL-Farbfernsehempfänger mit einem Decoder, wie er in einem oder mehreren oder Ansprüche 7-11 beschrieben ist. Auch bei einem derartigen Übertragungsverfahren ergibt sich insgesamt im Vergleich zu Übertragungsverfahren mit herkömmlichen PAL-Codern und -Decodern eine Verringerung von Cross-Colour und Cross-Luminance.

Bei einem dritten Verfahren wird senderseitig ein Coder, wie er in einem oder mehreren der Ansprüche 1-6 beschrieben ist, und empfangsseitig ein Decoder verwendet, wie er in einem oder mehreren der Ansprüche 7-11 beschrieben ist. Bei diesem Verfahren treten im Empfänger weder Cross-Colour- noch Cross-Luminance-Störungen auf. Ferner beträgt die Horizontalauflösung für das Luminanzsignal 5 MHz und ist nicht - wie bei herkömmlichen Systemen - beispielsweise auf 3.9 MHz begrenzt.

Ein Beispiel für eine Realisierung eines kombinierten vertikal-zeitlichen Filters ist aus der Figur 7 ersichtlich. Es besteht im wesentlich aus 4 Speichereinheiten, in denen das Eingangssignal um jeweils 312 Zeilen verzögert wird, 5 Multiplizierern, in denen das unverzögerte Eingangssignal mit einem Koeffizienten $c_2$, das um 312 Zeilen verzögerte Signal mit einem Koeffizienten $C_1$, das um 624 Zeilen verzögerte Signal mit einem Koeffizienten $C_0$, das um 936 Zeilen verzögerte Signal mit einem Koeffizienten $C_1$, und das um 1248 Zeilen verzögerte Signal mit einem Koeffizienten $C_2$ multipliziert wird, und einer Addierstufe, in der die Ausgangssignale der 5 Multiplizierer aufaddiert werden.

## Ansprüche

1. Einrichtung zur Codierung von Farbfernsehsignalen, welche aufweist:
- eine Matrixschaltung (1) zur Umwandlung von RGB-Eingangssignalen in ein Luminanzsignal und zwei Farbdifferenzsignale,
- einen Quadratur-Modulator (5) zur Umwandlung der Farbdifferenzsignale in ein moduliertes Chrominanzsignal
- eine Additionsschaltung (6) zur Addition von Luminanzsignal und moduliertem Chrominanzsignal,
- eine dreidimensionale Filterschaltung im Luminanzkanal, und
- eine dreidimensionale Filterschaltung in den Chrominanzkanälen, welche aus dreidimensionalen Teilfiltern (3, 4) besteht, wobei das erste Teilfilter (3) zwischen der Matrixschaltung (1) und dem Quadratur-Modulator (5) im Weg des ersten Farbdifferenzsignals und das zweite Teilfilter (4) zwischen der Matrixschaltung (1) und dem Quadratur-Modulator (5) im Weg des zweiten Farbdifferenzsignals angeordnet ist, wobei die im Weg der Farbdifferenzsignale gelegenen beiden Teilfilter (3, 4) jeweils aus einer Reihenschaltung eines Tiefpaßfilters (31, 41) und eines kombinierten vertikal-zeitlichen Filters (32, 42) bestehen, dadurch gekennzeichnet, daß der Durchlaßbereich des im Weg des ersten Farbdifferenzsignals gelegenen vertikal-zeitlichen Filters (32) kleiner ist als der Durchlaßbereich des im Weg des zweiten Farbdifferenzsignals gelegenen vertikal-zeitlichen Filters (42).

2. Einrichtung nach Anspruch 1, dadurch gekennzeichnet, daß die im Weg des Luminanzsignal gelegene dreidimensionale Filterschaltung (2) ein Tiefpaßfilter (11) und ein kombiniertes vertikal-zeitliches Filter (13-20) aufweist.

3. Einrichtung nach Anspruch 2, dadurch gekennzeichnet, daß nur die höherfrequenten Anteile des Luminanzsignals dem kombinierten vertikal-zeitlichen Filter (13-20) zugeführt werden.

4. Einrichtung nach Anspruch 3, dadurch gekennzeichnet, daß das vertikal-zeitliche Filter (13-20) aufweist:
- erster Schaltmittel (13, 14, 15, 16), in denen die höherfrequenten Anteile des Luminanzsignals einer vertikal-zeitlichen Filterung unterworfen werden, die invers zu der vertikal-zeitlichen Filterung eines der beiden Farbdifferenzsignale ist, und
- zweite Schaltmittel (17, 18, 19, 20), in denen die Ausgangssignale der ersten Schaltmittel (13, 14, 15, 16) einer vertikal-zeitlichen Filterung unterworfen werden, die invers zu der vertikal-zeitlichen Filterung des anderen der beiden Farbdifferenzsignale ist.

5. Einrichtung zur Decodierung von Farbfernsehsignalen, welche aufweist:
- einen Quadratur-Demodulator zur Umwandlung des modulierten Chrominanzsignals in zwei Farbdifferenzsignale,
- eine dreidimensionale Filterschaltung im Luminanzkanal und
- eine dreidimensionale Filterschaltung im Chrominanzkanal,
dadurch gekennzeichnet, daß
- die im Chrominanzkanal angeordente dreidimensionale Filterschaltung aus zwei dreidimensionalen Teilfiltern (52, 53) besteht,
- das Teilfilter (52) nach dem Quadratur-Demodulator (51) im Weg des ersten Farbdifferenzsignals angeordent ist,
- das Teilfilter (53) nach dem Quadratur-Demodulator (51) im Weg des zweiten Farbdifferenzsignal angeordnet ist, und
- die beiden Teilfilter (52, 53) unterschiedlich dimensioniert sind.

6. Einrichtung nach Anspruch 5, dadurch gekennzeichnet, daß die im Weg der Farbdifferenzsignale gelegenen Teilfilter (52, 53) jeweils aus einer Reihenschaltung eines kombinierten vertikal-zeitlichen Filters (521, 531) und eines Tiefpaßfilters (522, 532) bestehen.

7. Einrichtung nach Anspruch 6, dadurch gekennzeichnet, daß der Durchlaßbereich des im Weg des ersten Farbdifferenzsignals gelegenen vertikal-zeitlichen Filters (521) kleiner ist als der Farbdifferenzsignals gelegenen vertikal-zeitlichen Filters (531).

8. Einrichtung nach einem oder mehreren der Ansprüche 5-7, dadurch gekennzeichnet, daß nur die höherfrequenten Anteile des Luminanzsignals einem kombinierten vertikal-zeitlichen Filter (61-68) zugeführt werden.

9. Einrichtung nach Anspruch 8, dadurch gekennzeichnet, daß das vertikal-zeitliche Filter (61-68) aufweist:
- erster Schaltmittel (61, 62, 63, 64), in denen die höherfrequenten Anteile des Luminanzsignals einer vertikal-zeitlichen Filterung unterworfen werden, die invers zu den vertikal-zeitlichen Filterung eines der beiden Farbdifferenzsignale ist, und
- zweite Schaltmittel (65, 66, 67, 68), in denen die Ausgangssignale der ersten Schaltmittel (61, 62, 63, 64) einer vertikal-zeitlichen Filterung unterworfen werden, die invers zu der vertikal-zeitlichen Filterung des anderen der beiden Farbdifferenzsignale ist.

10. Verfahren zur Übertragung von Farbfernsehsignalen, bei dem sendeseitig eine Einrichtung zur Codierung nach einem oder mehreren der Ansprüche 1-4 vorgesehen ist, **dadurch gekennzeichnet,** daß empfangsseitig die Signale mit einem herkömmlichen Decoder decodiert werden.

11. Verfahren zur Übertragung von Farbfernsehsignalen, bei dem sendeseitig eine Einrichtung zur Codierung nach einem oder mehreren der Ansprüche 1-4 und empfangsseitig eine Einrichtung zur Decodierung nach einem oder mehreren der Ansprüche 5-9 vorgesehen sind.

12. Verfahren zur Übertragung von Farbfernsehsignalen, bei dem empfangsseitig eine Einrichtung zur Decodierung nach einem oder mehreren der Ansprüche 5-9 vorgesehen ist, **dadurch gekennzeichnet,** daß sendeseitig die Signale mit einem herkömmlichen Coder codiert werden.

FIGUR 1

FIGUR 2a

FIGUR 2b

FIGUR 2c

FIGUR 2d

FIGUR 3

FIGUR 6

EP 0 331 985 A2

FIGUR 4

FIGUR 5

a)

b)

FIGUR 7